(19) Europäisches Patentamt
European Patent Office
Office européen des brevets

(11) **EP 1 200 794 B1**

(12) **FASCICULE DE BREVET EUROPEEN**

(45) Date de publication et mention
de la délivrance du brevet:
**14.01.2009 Bulletin 2009/03**

(51) Int Cl.:
***G01B 7/02*** *(2006.01)*  ***G01D 5/20*** *(2006.01)*
***H04B 5/00*** *(2006.01)*

(21) Numéro de dépôt: **01958194.1**

(86) Numéro de dépôt international:
**PCT/FR2001/002476**

(22) Date de dépôt: **27.07.2001**

(87) Numéro de publication internationale:
**WO 2002/010674 (07.02.2002 Gazette 2002/06)**

(54) **SYSTEME DE LOCALISATION A COURTE DISTANCE**

POSITIONSBESTIMMUNGSSYSTEM ÜBER KURZE ENTFERNUNG

SHORT-DISTANCE LOCATING SYSTEM

(84) Etats contractants désignés:
**DE GB IT**

(30) Priorité: **31.07.2000 FR 0010045**

(43) Date de publication de la demande:
**02.05.2002 Bulletin 2002/18**

(73) Titulaire: **COMMISSARIAT A L'ENERGIE ATOMIQUE**
**75015 Paris (FR)**

(72) Inventeur: **DURET, Denis**
**F-38100 Grenoble (FR)**

(74) Mandataire: **Poulin, Gérard et al**
**Brevalex**
**3, rue du Docteur Lancereaux**
**75008 Paris (FR)**

(56) Documents cités:
**GB-A- 2 257 528**  **US-A- 3 852 662**
**US-A- 5 721 487**

## Description

Domaine de l'invention

L'invention concerne un système électromagnétique de l'ocalisation d'un objet mobile par rapport à un référentiel fixe, dans lequel le déplacement de l'objet est de l'ordre de quelques centimètres, avec une précision submillimétrique.

L'invention trouve des applications dans de nombreux domaines et, en particulier, dans le domaine de la mécanique des structures pour étudier les déformations de solides soumis à des contraintes ou bien dans le domaine de la protection pour surveiller la position d'un objet susceptible d'être volé ou encore dans le domaine dans la réalité virtuelle pour localiser des éléments d'interface homme-machine.

Etat de la technique

Actuellement, il existe de nombreux systèmes de localisation d'un objet mobile par rapport à un référentiel fixe. Parmi ces systèmes, certains sont dédiés uniquement à la localisation à courte distance, c'est-à-dire lorsque le déplacement de l'objet par rapport au référentiel est de courte distance, à savoir de l'ordre de quelques centimètres à quelques mètres.

L'une des techniques de localisation à courte distance est une technique visuelle, qui consiste à fixer, sur l'objet mobile, une cible reconnaissable et à viser cette cible au moyen de plusieurs caméras. Les images provenant des caméras sont ensuite traitées pour retrouver la position de la cible et, par conséquent, de l'objet. Cependant, ces systèmes sont limités par le fait que la cible doit nécessairement être vue par les caméras, c'est-à-dire doit être dans le champ de vision de ces caméras. IL ne faut donc la présence d'aucun obstacle. En outre, ce système présente une infrastructure extérieure . importante, c'est-à-dire des dimensions importantes ; il est donc difficilement utilisable pour une localisation de quelques centimètres seulement.

Une variante de cette technique visuelle consiste à utiliser des télémètres, par exemple laser, qui visent la cible. Cette technique permet de localiser un objet se déplaçant sur des distances de quelques centimètres ; mais elle présente toujours l'inconvénient de nécessiter que la cible soit visible depuis le télémètre.

Pour localiser un objet à courte distance, il est possible également d'utiliser une technique mécanique qui consiste à fixer l'objet à un ensemble de liaisons mécaniques. Dans ce cas, la liaison entre l'objet à localiser et le référentiel est mécanique, ce qui présente des inconvénients dans le sens où tous les déplacements peuvent ne pas être autorisés et où la détection du déplacement n'est pas très précise.

Une autre technique de localisation à courte distance consiste à utiliser des dipôles magnétiques associés à des magnétomètres. Un système de ce type est décrit dans la demande de brevet EP-0-215 695. La localisation de dipôles magnétiques par des magnétomètres est adaptée à la localisation d'objets se déplaçant sur des distances de quelques centimètres jusqu'à quelques mètres ; pour détecter des déplacements centimétriques, c'est-à-dire pour de la localisation à très courte distance, il est nécessaire de miniaturiser le système. Or, il est difficile de miniaturiser des capteurs magnétométriques dont les précisions doivent être élevées.

En outre, la localisation d'un objet en trois dimensions fait appel à des algorithmes de calcul complexes ; la mise en oeuvre de ce système pour localiser un objet se déplaçant de quelques centimètres, selon trois dimensions, est donc difficilement envisageable avec un tel système.

Exposé de l'invention

L'invention a justement pour but de remédier aux inconvénients des techniques décrites précédemment. A cette fin, elle propose un système électromagnétique de localisation d'un objet mobile par rapport à un référentiel fixe, dans lequel le déplacement de l'objet est de l'ordre de quelques centimètres et la précision est submillimétrique.

Plus précisément, l'invention concerne un système de localisation d'un objet mobile par rapport à un référentiel fixe, qui se caractérise par le fait que :

- l'objet mobile est équipé d'une sonde (1) comportant au moins un circuit résonant assurant la réception d'un champ magnétique de fréquence $f_g$ et l'émission d'un champ magnétique à la fréquence $f_e$ ; et
- le référentiel (2) est équipé :

  • de moyens d'émission/ réception de champ magnétique comportant un générateur de tension (G) générant un signal de fréquence $f_g$ alimentant au moins une bobine électromagnétique (L3 ; L5) et au moins un condensateur (C3; C5) formant, avec ladite bobine, un circuit résonant série ;
  • de moyens d'anti-éblouissement assurant une reconnaissance, par les moyens d'émission/réception, du champ magnétique de fréquence $f_e$ par rapport au champ magnétique de fréquence $f_g$ ; et
  • de moyens de détection et de comparaison (4) pour détecter l'amplitude de la tension induite aux bornes du circuit résonant d'émission/réception et en déduire le déplacement de la sonde par rapport au référentiel.

Dans un premier mode de réalisation, la fréquence $f_e$ d'émission du champ magnétique et la fréquence $f_g$ de réception du champ magnétique sont égales, la sonde comportant un seul circuit résonant LC parallèle. Dans ce cas, les moyens d'émission/réception de champ magnétique peuvent comporter des résistances connectées aux circuits résonants d'émission/réception et aux moyens de détection et de comparaison, selon un montage en pont.

Dans un autre mode de réalisation, la sonde comporte un premier circuit résonant LC parallèle assurant la réception du champ magnétique de fréquence fg et un second circuit résonant LC série assurant l'émission du champ magnétique de fréquence $f_e$, avec $f_g \neq f_e$.

Selon encore un autre mode de réalisation de l'invention, le système de localisation est caractérisé en ce que les moyens d'émission/réception comportent :

- un circuit résonant d'émission du champ magnétique à la fréquence $f_g$ ; et
- au moins un circuit de réception du champ magnétique à la fréquence $f_e$, comprenant une bobine secondaire, connectée à un condensateur pour former un circuit résonant secondaire.

Avantageusement, les bobines secondaires ont des axes parallèles les uns aux autres et parallèles à l'axe de la bobine de la sonde.

Les moyens de détection et de comparaison peuvent comprendre :

- un amplificateur différentiel connecté aux bornes de chaque circuit résonant de réception ;
- des moyens de synchronisation pour synchroniser les signaux issus de chaque amplificateur différentiel ; et
- des moyens de traitement pour déduire la position de la sonde à partir des signaux provenant des circuits résonants secondaires.

Selon une première variante, les moyens d'anti-éblouissement sont des bobines électromagnétiques placées à proximité de chaque bobine secondaire et alimentées par le générateur.

Selon une seconde variante, les moyens d'anti-éblouissement sont des amplificateurs différentiels recevant sur une entrée le signal issu des moyens de détection et de comparaison et sur une autre entrée une tension ajustable.

Brève description des figures

- La figure 1 représente schématiquement le circuit électromagnétique du système de l'invention, dans son premier mode de réalisation ;
- les figures 2A et 2B représentent schématiquement le circuit électromagnétique du système de l'invention dans son second mode de réalisation ; et
- la figure 3 représente la sonde du système de l'invention, conforme à un second mode de réalisation.

Description détaillée des modes de réalisation de l'invention

L'invention concerne un système de localisation électromagnétique permettant de localiser un objet mobile, visible ou non visible, par rapport à un référentiel fixe, pour un déplacement de l'ordre du centimètre.

Dans le système de l'invention, l'objet mobile à localiser est équipé d'une sonde réalisée au moyen d'au moins un circuit résonant LC, permettant la réception d'un champ magnétique à une fréquence $f_g$ et l'émission d'un champ magnétique à une fréquence $f_e$ comprise entre environ 100 kHz et 1 MHz.

Selon un premier mode de réalisation de la sonde, les fréquences $f_g$ et $f_e$ sont égales. Dans ce mode, la sonde comporte un seul circuit résonant, formé d'une bobine L1 et d'un condensateur C1 connectée en parallèle. Dans ce cas, la tension induite par le champ magnétique reçu permet la circulation d'un courant dans le circuit résonant qui, en parcourant la bobine d'induction L1, génère un champ magnétique.

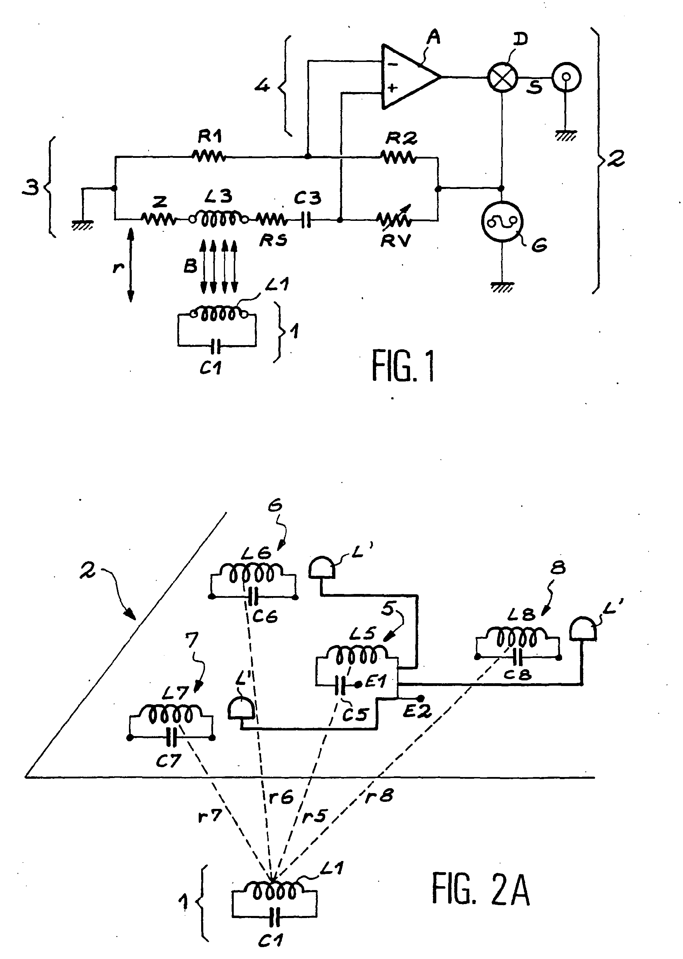

Ce premier mode de réalisation de la sonde est illustré sur la figure 1, qui sera décrite en détails ultérieurement.

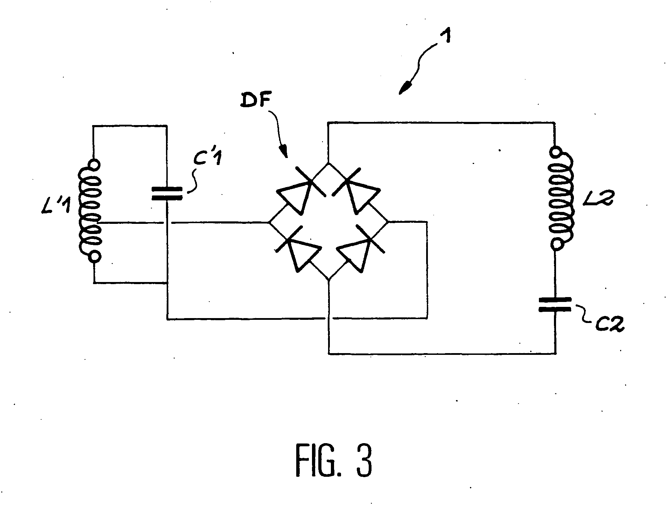

Dans un second mode de réalisation, représenté sur la figure 3, la sonde comporte deux circuits résonants LC. L'un de ces circuits résonants comporte une bobine L1' et un condensateur C1' connectés en parallèle ; ce circuit assure la réception du champ magnétique à la fréquence $f_g$. L'autre circuit comporte une bobine L2 et un condensateur C2 connectés en série ; ce circuit assure l'émission d'un champ magnétique de fréquence fe ≠fg. Sur l'exemple de la figure 3, le circuit de réception L1'C1' et le circuit d'émission L2C2 sont connectés l'un à l'autre par l'intermédiaire d'un doubleur de fréquence DF réalisé, par exemple, par un pont de diodes. Dans ce cas, $f_e = 2 \times f_g$.

Pour des raisons de simplification de la description, la suite du système de l'invention sera décrite pour une sonde conforme à son premier mode de réalisation, c'est-à-dire comportant un seul circuit LC.

Dans le système de l'invention, le référentiel fixe est équipé de moyens d'émission d'un champ magnétique. Ces moyens d'émission consistent en un circuit résonant LC et en un générateur de tension générant un signal à la fréquence fg. Le circuit résonant LC de ces moyens d'émission comporte une bobine électromagnétique qui génère un champ magnétique B à la fréquence $f_g$. Ce circuit résonne à une fréquence $f_g$, c'est-à-dire la même fréquence que le générateur.'

Sur la figure 1, on a représenté schématiquement un premier mode de réalisation du système de l'invention.

Dans ce mode de réalisation, la sonde de l'objet mobile référencée 1 est une sonde à un seul circuit résonant.

Le référentiel fixe est référencé 2 ; il est équipé d'un circuit électromagnétique qui comporte, d'une part, des moyens 3 d'émission/réception d'un champ magnétique et, d'autre part, des moyens 4 de détection et de comparaison de deux signaux prélevés aux bornes des moyens d'émission/réception.

Dans ce mode de réalisation, le même circuit assure à la fois l'émission d'un champ magnétique $f_g$ et la réception du champ magnétique $f_e$ (avec $f_g = f_e$).

Les moyens d'émission/réception 3 comportent un générateur G émettant un signal à la fréquence $f_g$, et un circuit résonant constitué d'une bobine L3 et d'un condensateur C3, connectés en série.

Le rôle de cette bobine L3 est à la fois d'émettre un champ magnétique à la même fréquence $f_e$ que la fréquence de résonance de la sonde et d'être sensible à la position de la sonde.

Les moyens d'émission/réception 3 comportent également deux résistances R1 et R2, en série, montées avec le circuit résonant L3C3 et la résistance variable $R_v$ pour former un pont. Des moyens de détection et de comparaison 4 sont connectés entre les deux branches des moyens d'émission/réception, c'est-à-dire, d'une part, entre les résistances R1 et R2 et, d'autre part, en sortie du circuit L3C3 pour comparer les tensions des signaux circulant dans ces deux branches.

Ces moyens de détection et de comparaison peuvent consister en un amplificateur différentiel, référencé A, dont les bornes d'entrée + et - sont connectées sur les branches du montage en pont. L'amplificateur A est connecté, à sa sortie, à des moyens de détection synchrone D, eux-mêmes connectés au générateur G. Ainsi, la tension aux bornes de l'amplificateur différentiel A est détectée par détection synchrone avec le générateur G.

Dans ce mode de réalisation de l'invention, les moyens d'anti-éblouissement sont réalisés par le pont de mesure (circuit L3C3 + résistances R1, R2, $R_v$). Ces moyens d'anti-éblouissement ont pour rôle, lors de la réception du champ magnétique de fréquence $f_e$, de permettre une meilleure reconnaissance dudit champ magnétique par les moyens d'émission/réception. Autrement dit, l'amplificateur A n'est pas ébloui par le champ d'émission de fréquence $f_g$. En outre, ces moyens d'anti-éblouissement permettent, aux moyens de détection, de ne pas détecter le signal provenant de l'émission par le référentiel fixe.

Sur la figure. 1, on a référencé B le champ magnétique émis par la bobine L3 et reçu par le circuit résonant de la sonde 1. La bobine L3 est associée à un condensateur C3, de façon à ce que la fréquence de résonance du circuit L3C3 soit égale à la fréquence du générateur $f_g$. A la résonance, l'impédance de ce circuit L3C3 se limite à la valeur de la résistance de perte Rs de la bobine. L'ensemble de ce circuit fait partie d'un montage en pont. L'impédance, notée Z, placée en série avec la bobine L3, représente un terme dû au couplage entre L3 et L1, accordée à la même fréquence que le générateur. Cette impédance Z dépend uniquement des propriétés des circuits résonants L3C3 et L1C1, et de leur position géométrique l'une par rapport à l'autre.

En effet, lorsque la sonde est à une distance très grande devant les dimensions des bobines, l'impédance Z est nulle. La condition d'équilibre du pont s'écrit alors RsR2 = R1Rv, où Rv est une résistance variable permettant d'équilibrer le pont. Le rapprochement de la sonde, par rapport au référentiel 2, induit l'apparition d'une valeur d'impédance Z non nulle, ce qui induit une différence de tension aux bornes des moyens de comparaison 4.

On comprend ainsi que le système permet d'estimer des variations de la distance entre la sonde 1 et le référentiel fixe 2 dans lequel se trouve la bobine L3.

En pratique, il est intéressant de régler l'équilibre du pont à une distance de repos r et donc de n'observer une tension non-nulle que pour les variations de distance entre la sonde et le référentiel. Autrement dit, si les variations de la distance d entre la sonde et le référentiel sont faibles par rapport à la distance de repos r, la tension détectée peut s'obtenir analytiquement par des relations connues de l'homme du métier, telles que celles décrites dans F. TERMAN, Radio Engineer's handbook, Mc Graw Hill Inc. New-York and London, 1943, pp. 67-73 et 148-164.

Une autre méthode pour régler le système est tout simplement d'étalonner le système.

Il est à noter que si ce système est sensible aux variations de la distance d, il l'est aussi aux variations d'orientation des axes des bobines l'une par rapport à l'autre. Aussi, il est préférable que les axes des bobines L3 et L1 soient parallèles, c'est-à-dire de sens et de direction identiques.

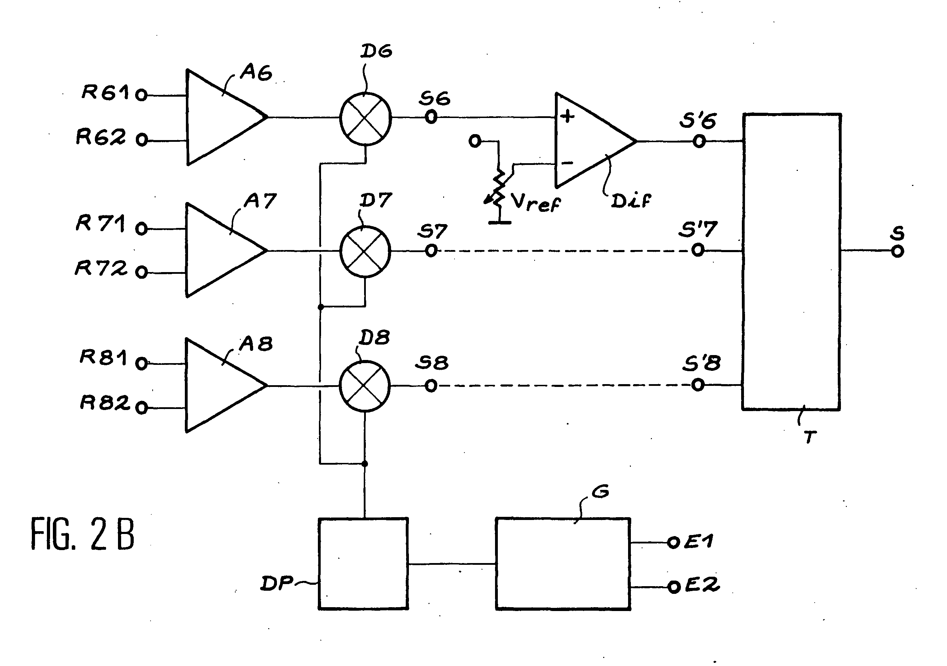

Sur les figures 2A et 2B, on a représenté le système de l'invention, dans un autre mode de réalisation.

Dans ce mode de réalisation, le montage en pont du circuit électromagnétique du référentiel 2 est remplacé par un circuit de compensation du signal, réalisé au moyen de contre-bobines.

Dans ce mode de réalisation, la sonde de l'objet mobile est choisie identique à celle du premier mode de réalisation. Ses références restent donc identiques à celles de la figure 1.

Comme montré sur la figure 2A, le référentiel 2 comporte, dans ce mode de réalisation, un circuit résonant d'émission, référencé 5, et plusieurs circuits résonants de réception, référencés 6, 7 et 8. Les circuits résonants de réception comportent chacun une bobine de réception L6, L7 ou L8, connectée en parallèle avec un condensateur C6, C7 ou C8, respectivement.

Comme dans le premier mode de réalisation, la bobine d'émission L5 des moyens d'émission 5 a pour rôle de générer un champ magnétique B, à la fréquence $f_g$.

La sonde est donc soumise à un champ magnétique qui induit un courant dans son circuit LC. La sonde se comporte alors comme un circuit émetteur secondaire et génère à son tour un champ magnétique qui est reçu par les circuits de réception 6, 7 et 8.

Le fait d'utiliser plusieurs circuits de réception permet d'augmenter le nombre de degrés de liberté dans le déplacement de l'objet. Aussi, pour détecter un déplacement selon trois dimensions, l'invention propose d'utiliser trois circuits de réception.

Comme expliqué précédemment, l'axe de la bobine L5 est, de préférence, parallèle à l'axe de la bobine L1 de la sonde.

De même, les bobines secondaires ont, de préférence, leur axe parallèle à celui de la bobine L1 de la sonde.

Comme montré sur les figures 2A. et 2B, chaque circuit résonant 5, 6, 7, 8 est connecté à un circuit électronique de traitement de ces informations. Plus précisément, le circuit électromagnétique du référentiel 2 comporte des plots E1 et E2 assurant la connexion entre le générateur G et le circuit résonant L5C5. Le générateur peut être, par exemple, un oscillateur de fréquence fg.

Pour compenser la réactance de la bobine L5 à la fréquence du générateur $f_g$, un condensateur C5 est connecté en série avec cette bobine L5, de telle sorte que $4\pi^2 L5C5 = 1$. Le générateur G ne voit alors que l'impédance réelle des pertes de la bobine L5. A la distance de repos r5, entre la bobine L5 et la sonde 1, le champ magnétique B créé est de la forme :

$$B_0 = \frac{\mu_0 M}{4\pi r5^3},$$

où $\mu_0$ est la permittivité du vide et M le moment dipolaire de la bobine d'émission L5, avec M = niS, où n est le nombre de tours de la bobine d'émission, S sa section et i le courant qui la parcourt à la fréquence $f_g$.

Le courant induit dans la sonde est alors :

$$i_0 = \frac{2\pi f_g}{Rs} B_0,$$

dans laquelle Rs est la résistance série de la bobine L5 (Rs n'étant pas représenté sur cette figure par mesure de simplification de la figure).

Pour la distance de repos r6, entre le circuit de réception 6 et la sonde 1 le champ magnétique B secondaire créé par la sonde 1 est de la forme :

$$B_6 = \frac{\mu_0 M}{4\pi r6^3}.$$

Il en est de même pour les champs magnétiques secondaires $B_7$ et $B_8$, par rapport aux distances r7 et r8.

Chacun de ces champs magnétiques $B_6$, $B_7$ ou $B_8$ crée une tension induite dans la bobine respective L6, L7 ou L8, d'amplitude respective $2\pi f_g B_6$ ou $2\pi f_g B_7$ ou $2\pi f_g B_8$. Cette tension est multipliée par le coefficient de surtension du circuit résonant respectif L6C6, L7C7 ou L8C8 pour autant que ledit circuit soit accordé à la fréquence $f_g$.

Comme montré sur la figure 2B, les moyens de réception 6 sont connectés à un amplificateur A6 par l'intermédiaire de plots R61 et R62 placés à chaque extrémité de la bobine L6. L'amplitude du signal issu des moyens de réception et amplifié par A6 est détectée par comparaison avec le signal généré par le générateur G et convenablement déphasé par le déphaseur DP. Cette comparaison est réalisée, par exemple, par un détecteur synchrone D6, piloté par l'oscillateur G, et le déphaseur DP. Cette détection synchrone permet de filtrer, selon une bande étroite, le signal provenant des moyens de réception et donc de limiter la sensibilité du système aux parasites.

Il est à noter, toutefois, que ces moyens de détection ne sont nécessaires que lorsque la fréquence d'émission $f_g$ et la fréquence de réception $f_r$ sont égales. Dans le cas contraire (par exemple, si on utilise la sonde de la figure 3), ces moyens de détection ne sont pas utiles. Il suffit, alors, de filtrer le signal issu de l'amplificateur autour de la fréquence $f_e$.

Les moyens de traitement électronique des signaux provenant des moyens de réception 7 et 8 sont identiques à ceux qui viennent d'être décrits pour les signaux issus des moyens de réception 6.

Le système de l'invention comporte des moyens d'anti-éblouissement qui permettent d'éviter que les bobines secondaires L6, L7 et L8 ne soient « aveuglées » par le champ magnétique provenant de la bobine L5, c'est-à-dire pour que les bobines L6, L7 et L8 réagissent uniquement au champ magnétique de fréquence $f_e$ réémis par la sonde 1.

Par exemple, ces moyens d'anti-éblouissement peuvent consister en des bobines supplémentaires de dimensions plus petites que les bobines L6, L7 et L8 ; dans ce cas, le courant alimentant la bobine émettrice L5 alimente également ces bobines supplémentaires, placées à proximité de chacune des bobines secondaires L6, L7 et L8, et dont le rôle est de créer, au niveau des bobines secondaires, un champ égal et de sens opposé au champ émis par la bobine émettrice L5. Ainsi, lorsqu'il n'y a pas d'objet mobile à proximité du référentiel, le champ induit dans les bobines secondaires est nul.

Ces moyens d'anti-éblouissement peuvent aussi être réalisés électroniquement, au moyen d'amplificateurs différentiels. Dans ce cas, un amplificateur différentiel Dif est connecté en sortie de chaque dispositif de détection D6, D7 et D8 ; plus précisément, la borne + de chaque amplificateur Dif reçoit le signal S6, S7 ou S8 issu des détecteurs synchrones D6, D7 ou D8 et la borne - reçoit une tension ajustable $V_{ref}$. Cette tension $V_{ref}$ est réglée de sorte qu'elle annule le signal S6, S7 ou S8, en l'absence de sonde.

Une variante consiste à associer les deux moyens d'anti-éblouissement décrits précédemment ; dans ce cas, les moyens d'anti-éblouissement électroniques peuvent permettre de récupérer les défauts d'anti-éblouissement dus, par exemple, à des imperfections géométriques.

Les sorties S6, S7 et S8 des détecteurs synchrones [où les sorties S'6, S'7 ou S'8, si l'on a utilisé des amplificateurs différentiels Dif], sont connectées à des moyens de traitement T, qui utilisent ces signaux pour déterminer la position exacte de la sonde par rapport au référentiel. En effet, les variations de position de la sonde 1 par rapport au référentiel 2 induisent des variations de tension aux sorties des trois chaînes de détection S6, S7 et S8. Il est possible de corréler ces variations avec les distances de repos, r6, r7 et r8 par les équations données précédemment et, ainsi, de retrouver la position de la sonde, dès lors que les positions respectives des moyens d'émissions et des trois moyens de réception 6, 7 et 8 sont connues, en tenant compte du fait que deux distances r5 et r6 (ou r7 et r8, ou...) forment un triangle.

Ces moyens de traitement T sont des moyens de calcul classiques issus des équations de champ ou obtenues par apprentissage.

L'invention a été décrite précédemment dans une configuration où l'on a un moyen d'émissions 5 et trois moyens de réception 6, 7, 8 et où l'axe de la sonde est parallèle. à l'axe des autres bobines. Toutefois, il est possible que l'axe de la sonde ne soit pas parallèle à l'axe des autres bobines. Dans ce cas, une variable supplémentaire est utilisée pour augmenter le nombre d'équations par rapport aux inconnues, cette variable provenant de l'utilisation de moyens de réception supplémentaires, d'axe perpendiculaire.

Le circuit électronique de la figure 2B peut être, avantageusement, miniaturisé sous forme d'un circuit intégré spécifique ; ce circuit peut être intégré au support contenant les bobines des circuits émetteurs et récepteurs de la figure 2A. Autrement dit, le système de l'invention peut être réalisé, par exemple, sur un circuit imprimé avec des bobines imprimées en forme de spirale. Le circuit électronique de la figure 2B est alors implémenté sur le même circuit, soit sous forme de composants intégrés montés en surface, soit sous la forme d'un circuit spécifique. De même, la sonde peut être réalisée sur un circuit imprimé.

Le système de l'invention peut également être réalisé au moyen de microbobinages, de façon à rendre le système très compact, c'est-à-dire avec des dimensions du même ordre de grandeur que la distance de localisation, à savoir de l'ordre du centimètre ou moins. De même, les dimensions de la sonde peuvent être extrêmement réduites, par exemple millimétriques.

## Revendications

1. Système de localisation d'un objet mobile par rapport à un référentiel fixe, **caractérisé en ce que** :

   - l'objet mobile est équipé d'une sonde (1) comportant au moins un circuit résonant (L1C1) assurant la réception d'un champ magnétique de fréquence $f_g$ et l'émission d'un champ magnétique à la fréquence $f_e$ ; et
   - le référentiel (2) est équipé :

     . de moyens d'émission/ réception (3 ; 5) de champ magnétique comportant un générateur de tension (G) générant un signal de fréquence $f_g$ alimentant au moins une bobine électromagnétique (L3 ; L5) et au moins un condensateur (C3 ; C5) formant, avec ladite bobine, un circuit résonant série ;
     . de moyens d'anti-éblouissement assurant une reconnaissance, par les moyens d'émission/réception, du champ magnétique de fréquence $f_e$ par rapport au champ magnétique de fréquence $f_g$ ; et
     . de moyens de détection et de comparaison (4) pour détecter l'amplitude de la tension induite aux bornes du circuit résonant série d'émission/réception et en déduire le déplacement de la sonde par rapport au référentiel.

2. Système de localisation selon la revendication 1, **caractérisé en ce que** la fréquence d'émission du champ magnétique $f_e$ et la fréquence de réception du champ magnétique $f_g$ sont égales, la sonde comportant un seul circuit résonant LC parallèle.

3. Système de localisation selon la revendication 2, **caractérisé en ce que** les moyens d'émission/réception de champ magnétique comportent des résistances (R1, R2, $R_v$) connectées au circuit résonant d'émission/réception et aux moyens de comparaison, selon un montage en pont.

4. Système selon la revendication 1, **caractérisé en ce que** la sonde comporte un premier circuit résonant LC parallèle assurant la réception du champ magnétique de fréquence $f_g$ et un second circuit résonant LC série assurant l'émission du champ magnétique de fréquence $f_e$, avec $f_g \neq f_e$.

5. Système de localisation selon l'une quelconque des revendications 1, 2 ou 4, **caractérisé en ce que** les moyens d'émission/réception comportent :

   - un circuit résonant d'émission (5) du champ magnétique à la fréquence $f_g$ ; et
   - au moins un circuit de réception (6, 7, 8) du champ magnétique à la fréquence $f_e$, comprenant une bobine secondaire (L6, L7, L8), connectée à un condensateur (C6, C7, C8) pour former un circuit résonant secondaire.

6. Système de localisation selon l'une quelconque des revendications 1 à 5, **caractérisé en ce que** les bobines ont des axes parallèles les uns aux autres.

7. Système de localisation selon l'une quelconque des revendications 1 à 6, **caractérisé en ce que** les moyens de détection et de comparaison (4) comprennent :

   - un amplificateur différentiel (A ; A6, A7, A8) connecté aux bornes de chaque circuit résonant de réception ;
   - des moyens de synchronisation (D ; D6, D7, D8) pour synchroniser les signaux issus de chaque amplificateur différentiel avec le signal du générateur ; et
   - des moyens de traitement (T) pour déduire la position de la sonde à partir des signaux provenant des circuits résonants secondaires.

8. Système selon l'une quelconque des revendications 5 à 7, **caractérisé en ce que** les moyens d'anti-éblouissement sont des bobines électromagnétiques (L') placées à proximité de chaque bobine secondaire et alimentées par le générateur.

9. Système selon l'une quelconque des revendications 5 à 7, **caractérisé en ce que** les moyens d'anti-éblouissement sont des amplificateurs différentiels recevant sur une entrée le signal issu des moyens de détection et de comparaison et sur une autre entrée une tension ajustable.

**Claims**

1. Positioning system for a mobile object with respect to a fixed reference system, **characterized by** the fact that:

   - the mobile object is equipped with a probe (1) comprising at least one resonant circuit (L1C1) enabling reception of a magnetic field with frequency $f_g$ and transmission of a magnetic field at frequency $f_e$; and,
   - the reference system (2) is provided with:

     . means of transmission/reception (3; 5) of a magnetic field comprising a voltage generator (G) generating a signal with frequency $f_g$ powering at least one electromagnetic coil (L3; L5) and at least one capacitor (C3; C5) forming a series resonant circuit, with the said coil;
     . anti-dazzle means by which the transmission / reception means can distinguish the magnetic field with frequency $f_e$ from the magnetic field with frequency fg; and
     . detection and comparison (4) means to detect the amplitude of the voltage induced at the terminals of the series resonant transmission / reception circuit and to deduce the displacement of the probe with respect to the reference system.

2. Positioning system according to claim 1, **characterized in that** the transmission frequency $f_e$ of the magnetic field and the reception frequency $f_g$ of the magnetic field are equal, the probe comprising a single parallel resonant LC circuit.

3. Positioning system according to claim 2, **characterized in that** the magnetic field transmission / reception means include resistances (R1, R2, Rv) connected to the resonant transmission / reception circuit and to the comparison means, using a bridge set up.

4. Positioning system according to claim 1, **characterized in that** the probe comprises a first parallel LC resonant circuit for reception of the magnetic field with frequency $f_g$ and a second LC resonant circuit in series for transmission of the magnetic field with frequency $f_e$, where $f_g \neq f_e$.

5. Positioning system according to any one of claims 1, 2 or 4, **characterized in that** the transmission / reception means comprise:

   - a resonant transmission circuit (5) for the magnetic field at frequency $f_g$; and
   - at least one reception circuit (6, 7, 8) for the magnetic field at frequency $f_e$ comprising a secondary coil (L6, L7, L8) connected to a capacitor (C6, C7, C8) to form a secondary resonant circuit.

6. Positioning system according to any one of claims 1 to 5, **characterized in that** the axes of the coils are parallel to each other.

7. Positioning system according to any one of claims 1 to 6, **characterized in that** the detection and comparison means (4) comprise:

   - a differential amplifier (A; A6, A7, A8) connected to the terminals of each resonant reception circuit;
   - synchronization means (D; D6, D7, D8) to synchronize signals output from each differential amplifier with the generator signal; and

- processing means (T) to deduce the position of the probe from signals originating from secondary resonant circuits.

8. System according to any one of claims 5 to 7, **characterized in that** the anti-dazzle means are electromagnetic coils (L') placed close to each secondary coil and powered by the generator.

9. System according to any one of claims 5 to 7, **characterized in that** the anti-dazzle means are differential amplifiers into which the signal output from the detection and comparison means is input and an adjustable voltage is applied to another input.

## Patentansprüche

1. System zur Bestimmung der Position eines in Bezug auf ein ortsfestes Bezugssystem beweglichen Objekts,
   **dadurch gekennzeichnet, dass**:

   - das bewegliche Objekt mit einer Sonde ausgerüstet ist, die mindestens einen Resonanzkreis (L1C1) umfasst, der die Rezeption eines Magnetfelds der Frequenz fg und die Emission eines Magnetfelds der Frequenz $f_e$ gewährleistet; und
   - das Bezugssystem (2) ausgerüstet ist:

     . mit Magnetfeldemissions-/-rezeptionseinrichtungen (3 ; 5), einen Spannungsgenerator (G) umfassend, der mindestens eine elektromagnetische Spule (L3 ; L5) und mindestens einen elektromagnetischen Kondensator (C3 ; C5), der mit dieser Spule eine Serienresonanzkreis bildet, mit einem Signal der Frequenz fg speist;
     . mit Anti-blendungseinrichtungen, die eine Erkennung des Magnetfelds der Frequenz $f_e$ in Bezug auf das Magnetfeld der Frequenz fg gewährleisten; und
     . mit Detektions- und Vergleichseinrichtungen (4), um die Amplitude der an den Anschlüssen des Emissions-/Rezeptions-Serienresonanzkreises induzierten Spannung zu detektieren und davon die Verschiebung der Sonde in Bezug auf das Bezugssystem abzuleiten.

2. Positionsbestimmungssystem nach Anspruch 1, **dadurch gekennzeichnet, dass** die Emissionsfrequenz des Magnetfelds $f_e$ und die Rezeptionsfrequenz des Magnetfelds fg gleich sind, wobei die Sonde einen einzigen Parallelresonanzkreis LC umfasst.

3. Positionsbestimmungssystem nach Anspruch 2, **dadurch gekennzeichnet, dass** die Magnetfeldemissions-/-rezeptionseinrichtungen Widerstände (R1, R2, $R_v$) umfassen, die gemäß einer Brückenschaltung mit dem Emissions-/Rezeptions-Resonanzkreis und mit den Vergleichseinrichtungen verbunden sind.

4. System nach Anspruch 1, **dadurch gekennzeichnet, dass** die Sonde einen ersten, parallelen Resonanzkreis LC zur Rezeption des Magnetfelds der Frequenz fg und einen zweiten, seriellen Resonanzkreis LC zur Rezeption des Magnetfelds der Frequenz $f_e$ umfasst, mit $f_g \neq f_e$.

5. Positionsbestimmungssystem nach einem der Ansprüche 1, 2 oder 4, **dadurch gekennzeichnet, dass** die Emissions-/Rezeptionseinrichtungen umfassen:

   - einen Emissionsresonanzkreis (5) des Magnetfelds der Frequenz fg; und
   - wenigstens einen Rezeptionskreis (6, 7, 8) des Magnetfelds der Frequenz $f_e$, mit einer Sekundärspule (L6, L7, L8), verbunden mit einem Kondensator (C6, C7, C8), um einen Sekundärresonanzkreis zu bilden.

6. Positionsbestimmungssystem nach einem der Ansprüche 1 bis 5, **dadurch gekennzeichnet, dass** die Spulen zueinander parallele Achsen haben.

7. Positionsbestimmungssystem nach einem der Ansprüche 1 bis 6, **dadurch gekennzeichnet, dass** die Detektions- und Vergleichseinrichtungen (4) umfassen:

   - ein Differentialverstärker (A ; A6, A7, A8), verbunden mit den Anschlüssen jedes Rezeptionsresonanzkreises;
   - Synchronisationseinrichtungen (D ; D6, D7, D8) zum Synchronisieren der von jedem Differentialverstärker stammenden Signale mit dem Signal des Generators; und
   - Verarbeitungseinrichtungen (T) zum Ableiten der Position der Sonde aus den von den Sekundärresonanzkreisen stammenden Signalen.

8. System nach einem der Ansprüche 5 bis 7, **dadurch gekennzeichnet, dass** die Anti-blendungseinrichtungen elektromagnetische Spulen (L') sind, die sich in der Nähe jeder Sekundärspule befinden und durch den Generator gespeist werden.

9. System nach einem der Ansprüche 5 bis 7, **dadurch gekennzeichnet, dass** die Anti-blendungseinrichtungen Differentialverstärker sind, die über einen Eingang das von den Detektions- und Vergleichseinrichtungen stammende Signal und über einen anderen Eingang eine anpassbare bzw. einstellbare Spannung erhalten.

FIG. 1

FIG. 2A

FIG. 2B

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0215695 A

**Littérature non-brevet citée dans la description**

- **F. TERMAN.** Radio Engineer's handbook. Mc Graw Hill Inc, 1943, 67-73148-164